(19) Europäisches Patentamt
European Patent Office
Office européen des brevets

(11) EP 4 663 682 A1

(12) EUROPEAN PATENT APPLICATION

(43) Date of publication:
**17.12.2025 Bulletin 2025/51**

(21) Application number: **24382622.9**

(22) Date of filing: **10.06.2024**

(51) International Patent Classification (IPC):
***C08G 63/20*** *(2006.01)* ***C08G 63/91*** *(2006.01)*
***C09D 5/03*** *(2006.01)* ***C09D 167/00*** *(2006.01)*

(52) Cooperative Patent Classification (CPC):
(C-Sets available)
**C08G 63/916; C08G 63/20; C08G 63/914;**
**C09D 5/03; C09D 167/00;** C08G 2150/00 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Arkema Quimica SAU**
**08470 Sant Celoni (Barcelona) (ES)**

(72) Inventors:
- **SAN JUAN, Alexis**
  **08470 Sant Celoni, Barcelona (ES)**
- **QUERA, César**
  **08470 Sant Celoni, Barcelona (ES)**
- **CASADEVALL, Lluis**
  **08470 Sant Celoni, Barcelona (ES)**

(74) Representative: **Arkema Patent**
**Arkema France**
**DRD-DPI**
**51, Esplanade du Général de Gaulle**
**CS 10478**
**92907 Paris La Défense Cedex (FR)**

# (54) BRANCHED POLYESTER FOR POWDER COATINGS

(57) The present invention relates to a branched carboxyl-functionalized polyester having units derived from a hydroxylated branching polyacid component as well as its preparation process. The invention also relates to the use of the branched polyester of the invention in a coating composition, in particular a powder coating composition, having enhanced reactivity and/or reduced cure temperature.

EP 4 663 682 A1

(52) Cooperative Patent Classification (CPC): (Cont.)

C-Sets
**C09D 167/00, C08L 63/00**

## Description

## TECHNICAL FIELD

The present invention relates to a branched carboxyl-functionalized polyester having units derived from a hydroxylated branching polyacid component. The invention also relates to the use of the branched polyester of the invention in a coating composition, in particular a powder coating composition, having enhanced reactivity and/or reduced cure temperature.

## TECHNICAL BACKGROUND

Many substrates require one or more layers of coating to provide an aesthetic aspect, enhanced surface properties and/or a protection from diverse factors such as corrosion, heat, wear, exposure to solvents, stains, UV's, etc. Due to increasing concerns in environmental pollution, the coating industry is shifting towards volatile organic compounds (VOC) reduction or elimination.

Powder coatings, which are dry, finely divided, free flowing and solid materials at room temperature, have gained popularity in recent years over liquid coatings. Powder coatings are an environmentally promising technology since they do not contain any VOC and do not require exhaust treatment or wastewater treatment. This is a significant advantage over liquid paints in which organic solvent is volatilized into the atmosphere when the paint is cured by heating. In addition, excess powder coating material can be reclaimed and reused.

Generally, the usual method for producing a polyester resin for powder coatings comprises a first step of reacting a diol with a diacid, to obtain an initial hydroxyl-functionalized prepolymer. In further steps, this prepolymer is reacted with one or more polyacids in order to obtain a final carboxyl-functionalized polyester with the appropriate functionality, molecular weight and the right balance between acid value and hydroxyl value. The resin thus produced can be used as a binder in a coating composition in combination with an acid-reactive crosslinker such as an epoxy resin or a hydroxyalkylamide.

Despite their many advantages, powder coatings are generally cured at temperatures of at least 160°C, typically about 180°C. Below these recommended temperatures, the coatings have poor appearance, as well as poor physical and chemical properties.

Due to the elevated curing temperatures, powder coatings are generally not used to coat heat-sensitive substrates such as wood, in particular medium density fiber board (MDF), plastics, composites and certain low melting metal alloys. Besides, when conventional powder coatings are used to coat heavy metal pieces, they require extremely long curing times in order to obtain a fully cured coating, which is very inconvenient from an energetic point of view.

It is therefore challenging to provide low-cure powder coatings (i.e., powder coatings that cure at a temperature lower than 160°C, preferably lower than 155°C, more preferably lower than 150°C, even more preferably lower than 145°C and most preferably lower than 140°C) that exhibit good chemical resistance, good mechanical and weathering properties whilst maintaining good appearance. Poor appearance is expected due to worse flow at reduced curing temperatures. Additionally, the Tg of the polyester resin, and the Tg of the resultant uncured powder coating composition formulated from it, must be high enough to ensure suitable storage stability.

One way of obtaining low-cure powder coatings is to increase the reactivity of the polyester resin so that the curing step can be conducted by heating the coating composition for shorter periods of time and/or at low temperatures.

High reactivity can be achieved by adding high amounts of curing catalyst, such as phosphonium salts or amine type catalyst. However, this is not useful when hydroxyalkylamide is used as a crosslinker.

Alternatively, high reactivity can be achieved by increasing the acid functionality of the polyester resin. In order to obtain polyesters with high acid value, an amount of branching polyacid such as trimellitic anhydride (TMA), can be added at the end of the synthesis process as described in US 4065438A, US 4147737A or EP 1054917. Such systems may be cured at very low temperatures in the range between 120-130°C. However, the use of TMA in these systems results in several drawbacks, for example, the residual amounts of unreacted TMA in final products. TMA has recently been classified as a substance of very high concern (SVHC), thus limiting the product safe handling procedure and its technology expansion and requiring labelling of existing commercial products comprising residual TMA. There is thus a specific and clear need to avoid the use of TMA in polyesters and to find other branching agents that are capable of improving polyester formulations.

After extensive research, the Applicant has found that the introduction of a relatively high amount of a hydroxylated branching polyacid component having an acid functionality of at least 3 and a hydroxyl functionality of at least 1 at the end of the synthesis of the polyester can provide TMA-free polyester resins with excellent reactivity. Said polyester resin can thus be used as a binder in a low-cure powder coating that exhibits good chemical resistance, good mechanical and weathering properties whilst maintaining good appearance.

## SUMMARY OF THE INVENTION

The present invention relates to a branched polyester obtained by reacting:

a) a hydroxyl-functionalized polyester component based on a polyol component a1) and a polyacid component a2); and

b) a hydroxylated branching polyacid component having an acid functionality of at least 3 and a hydroxyl functionality of at least 1;

wherein the number of moles of component b) is from 9 to 20% based on the total number of moles of components a) + b).

Another object of the invention is the use of the branched polyester according to the invention, in a coating composition, preferably in a powder coating composition, more preferably in a crosslinkable powder coating composition.

Another object of the invention is a coating composition comprising:

- the branched polyester according to the invention;
- a crosslinker component;
- optionally a catalyst;
- optionally one or more additives.

Yet another object of the invention is a substrate fully or partially coated with the coating according to the invention.

Yet another object of the invention is a process for coating a substrate comprising the following steps:

- applying the coating composition according to the invention on at least part of a surface of a substrate; and
- curing the coating composition.

## DETAILED DESCRIPTION OF THE INVENTION

### Branched polyester

The present invention relates to a branched polyester.

As used herein, a polyester means a polymer comprising a plurality of ester bonds. A polyester is generally based on a polyol component and a polyacid component. Accordingly, a polyester comprises moieties derived from the polymerization of a polyol component and a polyacid component. A branched polyester means a polyester modified with a branching agent having at least 3 functional groups.

The branched polyester of the invention is obtained by reacting two distinct components a) and b) as described below. In particular, the branched polyester of the invention is obtained by covalently reacting components a) and b) (i.e forming covalent bonds between components a) and b)). More particularly, the branched polyester of the invention is obtained by reacting components a) and b) so that at least part of the units derived from component b) are non-terminal units. As used herein, the term non-terminal units means linear units (i.e. units connected to two other units) and/or branching units (i.e. units connected to at least three other units) that are incorporated in the backbone of the polymer. Even more particularly, the branched polyester of the invention is obtained by reacting components a) and b) so that at least part of the units derived from component b) are units connected to at least two units derived from component a). Even more particularly still, the branched polyester of the invention is obtained by reacting components a) and b) so that the branched polyester comprises at least one unit represented by the following formula:

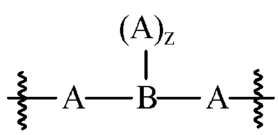

wherein

each A is independently a unit derived from component a)
each B is in a unit derived from component b)
z is 0 or 1.

After reaction of components a) and b), the branched polyester may be a branched carboxyl-functionalized

polyester. As used herein, a branched carboxyl-functionalized polyester means a branched polyester bearing carboxylic acid functional groups.

Hydroxyl-functionalized polyester component

One of the components used to obtain the branched polyester of the invention is a hydroxyl-functionalized polyester component, also referred to as component a).

A hydroxyl-functionalized polyester component comprises or consists of at least one hydroxyl-functionalized polyester. A hydroxyl-functionalized polyester component may comprise or consist of a mixture of hydroxyl-functionalized polyesters.

A hydroxyl-functionalized polyester is a polyester bearing hydroxyl functional groups. In particular, component a) may have a hydroxyl value of from 80 to 200 mg KOH/g, preferably from 90 to 195 mg KOH/g, more preferably from 100 to 190 mg KOH/g.

A hydroxyl-functionalized polyester may further bear carboxylic acid functional groups. In particular, component a) may have an acid value of from 6 to 80 mg KOH/g, preferably from 8 to 60 mg KOH/g, more preferably from 10 to 40 mg KOH/g.

Component a) is based on a polyol component, also referred to as component a1).

A polyol component comprises or consists of at least one polyol. A polyol component may comprise or consist of a mixture of polyols. As used herein, a polyol is a compound bearing at least two hydroxyl functional groups.

Component a1) comprises or consists of a diol component, also referred to as component a11), and optionally a branching polyol component, also referred to as component a12).

A diol component comprises or consists of at least one diol. A diol component may comprise or consist of a mixture of diols. As used herein, a diol is a compound bearing at least two hydroxyl functional groups. The hydroxyl functionality of the diol component is equal to 2.

In particular, component a11) may comprise or consist of at least one diol selected from the group consisting of an aliphatic diol, a cycloaliphatic diol, an aromatic diol, and combinations thereof.

Examples of suitable aliphatic diols include ethylene glycol, diethylene glycol, 1,2- or 1,3-propanediol, 1,2-, 1,3- or 1,4-butanediol, 1,5-pentanediol, 1,6-hexanediol, 1,10-decanediol, 1,12-dodecanediol, di-, or polyethylene glycol, di-, tri- or polypropylene glycol, neopentyl glycol, 2-butyl-2-ethyl-1,3-propanediol, 2-methyl-1,3-propanediol, 2-methyl-1,2-propanediol, 3-methyl-1,5-pentanediol, and combinations thereof.

Examples of suitable cycloaliphatic diols include 1,1-, 1,2-, 1,3- or 1,4-cyclohexanedimethanol, 1,2-, 1,3- or 1,4-cyclohexanediol, hydrogenated bisphenol A, isosorbide, isoidide, isomannide, 4,4'-bicyclohexanol, 1,3-adamantanediol, 1,4-anhydroerythritol, and combinations thereof.

Examples of suitable aromatic diols include bisphenol A, an alkoxylated bisphenol A, bisphenol F, an alkoxylated bisphenol F, 1,2-, 1,3- or 1,4-benzenedimethanol, benzopinacol, bipyridine diols, dihydroxynaphthalenes, binaphthols, and combinations thereof.

More particularly, component a11) may comprise or consist of at least one diol selected from the group consisting of neopentyl glycol, ethylene glycol, diethylene glycol, 1,2- or 1,3-propanediol, 1,2-, 1,3- or 1,4-butanediol, 1,5-pentanediol, 1,6-hexanediol, bisphenol A, hydrogenated bisphenol A, an alkoxylated bisphenol A and combinations thereof. Even more particularly, component a11) may comprise or consist of at least one diol selected from the group consisting of neopentyl glycol, ethylene glycol, diethylene glycol, 1,2- or 1,3-propanediol, 1,2-, 1,3- or 1,4-butanediol, 1,5-pentanediol, 1,6-hexanediol, and combinations thereof.

In a preferred embodiment, component a11) may be substantially free of isosorbide.

As used herein, the term component X) is substantially free of compound Z means that component X) comprises less than 5 mol%, less than 4 mol%, less than 3 mol%, less than 2 mol%, less than 1 mol% or even 0 mol%, of compound Z, based on the total number of moles of component X).

In a preferred embodiment, component a11) may be substantially free of a cycloaliphatic diol.

In a preferred embodiment, component a11) may be substantially free of an aromatic diol.

In a preferred embodiment, component a11) may be substantially free of a cyclic (i.e. aromatic and/or cycloaliphatic) diol.

Component a1) may further comprise a branching polyol component, also referred to as component a12). A branching polyol component comprises or consists of at least one branching polyol. A branching polyol component may comprise or consist of a mixture of branching polyols. As used herein, a branching polyol is a compound bearing at least three hydroxyl functional groups. Accordingly, the hydroxyl functionality of the branching polyol component is at least 3.

In particular, component a12) may comprise at least one branching polyol selected from trimethylolpropane, glycerol, tris(2-hydroxyethyl) isocyanurate, di(trimethylolpropane), pentaerythritol and combinations thereof.

In one embodiment, component a1) is free of component a12).

As used herein, the term component X) is free of compound Z means that component X) comprises 0 mol%, of

compound Z, based on the total number of moles of component X).

In an alternative embodiment, component a1) comprises component a12) and the amount of component a12) is from 0.001 to 10%, in particular from 0.2 to 5%, more particularly from 0.3 to 1 %, by weight based on the weight of component a1).

In a preferred embodiment, component a1) comprises less than 50 mol% of an aliphatic diol having a hydroxyl group bound to a secondary carbon atom, based on the number of moles of component a1). For example, component a1) may comprise from 30 to 49 mol%, in particular from 35 to 38 mol%, more particularly from 40 to 45 mol%, of an aliphatic diol having a hydroxyl group bound to a secondary carbon atom, based on the number of moles of component a1).

Examples of aliphatic diols having a hydroxyl group bound to a secondary carbon atom include 1,2-propanediol, 1,2-butanediol, 2,3-butanediol, 1,3-butanediol, 1,2-pentanediol, 1,3-pentanediol, 1,4-pentanediol, 2,3-pentanediol, 2,4-pentanediol, 1,2-hexanediol, 1,3-hexanediol, 1,4-hexanediol, 1,5-hexanediol, 2,3-hexanediol, 3,4-hexanediol, 2,4-hexanediol, 2,5-hexanediol, and the like.

In a preferred embodiment, component a1) may be substantially free of a polyol selected from oligosaccharides, polysaccharides, modified oligosaccharides, modified polysaccharides, polyvinyl alcohols or mixtures thereof.

Component a1) may represent from 25 to 65%, in particular from 30 to 60%, more particularly from 35 to 45%, of the total weight of component a).

Component a1) may represent from 50 to 70%, in particular from 51 to 65%, more particularly from 52 to 60%, of the total number of moles of component a).

Component a) is further based on a polyacid component, also referred to as component a2).

A polyacid component comprises or consists of at least one polyacid. A polyacid component may comprise or consist of a mixture of polyacids. As used herein, a polyacid is a compound bearing at least two carboxylic acid functional groups or a derivative thereof (i.e. a compound bearing functional groups which can be hydrolyzed to generate at least two carboxylic acid functional groups in situ, such as cyclic anhydrides and mono- or di(C1-C6 alkyl) esters).

Component a2) comprises or consists of a diacid component, also referred to as component a21), and optionally a branching polyacid component, also referred to as component a22).

A diacid component comprises or consists of at least one diacid. A diacid component may comprise or consist of a mixture of diacids. As used herein, a diacid is a compound bearing exactly two carboxylic acid functional groups or a derivative thereof (i.e. a compound bearing functional groups which can be hydrolyzed to generate two carboxylic acid functional groups in situ, such as cyclic anhydrides and mono- or di(C1-C6 alkyl) esters). The acid functionality of the diacid component is equal to 2.

In particular, component a21) may comprise at least one diacid selected from the group consisting of an aromatic dicarboxylic acid, a saturated or unsaturated aliphatic dicarboxylic acid, a saturated or unsaturated cycloaliphatic dicarboxylic acid, derivatives thereof and combinations thereof.

Examples of suitable aromatic dicarboxylic acids and derivatives thereof include phthalic acid, terephthalic acid, isophthalic acid, bis(4-carboxyphenyl)methane, dimethyl phthalate, dimethyl terephthalate, dimethyl isophthalate, phthalic anhydride and combinations thereof.

Examples of suitable saturated aliphatic dicarboxylic acids and derivatives thereof include as adipic acid, dimethyl adipate, diethyl adipate, sebacic acid, dimethyl sebacate, diethyl sebacate, succinic acid, dimethyl succinate, diethyl succinate, succinic anhydride, 2-methylsuccinic acid, 2-ethylsuccinic acid, 2,2-dimethylsuccinic acid, pimelic acid, suberic acid, azelaic acid, 1,11-undecanedioic acid, 1,12-dodecanedioic acid, oxalic acid, dimethyl oxalate, diethyl oxalate, malonic acid, dimethyl malonate, diethyl malonate, 2-methylmalonic acid, 2-ethylmalonic acid, glutaric acid, dimethyl glutarate, diethyl glutarate, glutaric anhydride, 3,3-dimethylglutaric acid, 3,3-diethylglutaric acid, a C32-C36 fatty acid dimer and combinations thereof.

Examples of suitable unsaturated aliphatic dicarboxylic acids and derivatives thereof include itaconic acid, citraconic acid, mesaconic acid, glutaconic acid, muconic acid, fumaric acid, maleic acid, maleic anhydride and combinations thereof.

Examples of suitable saturated cycloaliphatic dicarboxylic acids and derivatives thereof include cyclopentane 1,2- or 1,3-dicarboxylic acid, cyclohexane 1,2-, 1,3- or 1,4-dicarboxylic acid, cyclohexane-1,2-dicarboxylic anhydride, cycloheptane 1,2-dicarboxylic acid, 1,2-, 1,3 or 1,4-bis(carboxymethyl)cyclohexane.

Examples of suitable unsaturated cycloaliphatic dicarboxylic acids and derivatives thereof include tetrahydrophthalic acid, tetrahydrophthalic anhydride and combinations thereof.

More particularly, component a21) may comprise at least one diacid selected from the group consisting of terephthalic acid, isophthalic acid, succinic acid, adipic acid, sebacic acid, azelaic acid, derivatives thereof and combinations thereof.

Even more particularly, component a21) may comprise at least one diacid selected from the group consisting of terephthalic acid, isophthalic acid, adipic acid, derivatives thereof and combinations thereof.

In a preferred embodiment, component a21) comprises at least 60%, at least 70%, at least 80%, at least 90% or at least 95% by weight of terephthalic acid based on the weight of component a21). In a particularly preferred embodiment,

component a21) comprises less than 20%, less than 15% or less than 10% by weight of isophthalic acid based on the weight of component a21).

In a preferred embodiment, component a21) may be substantially free of a diacid selected from the group consisting of an unsaturated aliphatic dicarboxylic acid, an unsaturated cycloaliphatic dicarboxylic acid, derivatives thereof and combinations thereof.

Component a2) may further comprise a branching polyacid component, also referred to as component a22). A branching polyacid component comprises or consists of at least one branching polyacid. A branching polyacid component may comprise or consist of a mixture of branching polyacids. As used herein, a branching polyacid is a compound bearing at least three carboxylic acid functional groups or a derivative thereof. Accordingly, the acid functionality of the branching polyacid component is at least 3.

In particular, component a22) may comprise at least one branching polyacid selected from the group consisting of trimellitic acid, pyromellitic acid, hemimellitic acid, mellitic acid, derivatives thereof and mixtures thereof.

Advantageously, component a2) is free of citric acid, isocitric acid, derivatives thereof and mixtures thereof.

In a preferred embodiment, component a2) is free of component a22).

In an alternative embodiment, component a2) comprises component a22) and the amount of component a22) is from 0.001 to 2%, in particular from 0.1 to 1 %, more particularly from 0.3 to 1 %, by weight based on the weight of component a2).

In a preferred embodiment, component a2) comprises at least 20 mol% of cyclic (i.e. aromatic and/or cycloaliphatic) polyacids or derivatives thereof, based on the total number of moles of component a2). For example, component a2) may comprise from 20 to 100 mol%, from 30 to 100 mol%, from 40 to 100 mol%, from 50 to 100 mol%, from 60 to 100 mol%, from 70 to 100 mol%, from 80 to 100 mol%, from 90 to 100 mol%, or from 95 to 100 mol%, of cyclic (i.e. aromatic and/or cycloaliphatic) polyacids or derivatives thereof, based on the total number of moles of component a2).

In a particularly preferred embodiment, component a2) comprises at least 20 mol% of aromatic polyacids or derivatives thereof, based on the total number of moles of component a2). For example, component a2) may comprise from 20 to 100 mol%, from 30 to 100 mol%, from 40 to 100 mol%, from 50 to 100 mol%, from 60 to 100 mol%, from 70 to 100 mol%, from 80 to 100 mol%, from 90 to 100 mol%, or from 95 to 100 mol%, of aromatic polyacids or derivatives thereof, based on the total number of moles of component a2).

In a particularly preferred embodiment, component a2) comprises up to 20 mol% of aliphatic polyacids or derivatives thereof, based on the total number of moles of component a2). For example, component a2) may comprise from 0 to 20 mol%, from 0 to 15 mol%, from 0 to 10 mol%, from 0 to 5 mol%, from 0 to 4 mol%, from 0 to 3 mol%, from 0 to 2 mol%, from 0 to 1 mol%, or from 0 to 0.5 mol%, of aliphatic polyacids or derivatives thereof, based on the total number of moles of component a2).

Component a2) may represent from 35 to 75%, in particular from 40 to 70%, more particularly from 55 to 65%, of the total weight of component a).

Component a2) may represent from 30 to 50%, in particular from 35 to 49%, more particularly from 40 to 48%, of the total number of moles of component a).

In a preferred embodiment, component a) is substantially free of a fatty acid component. A fatty acid component comprises or consists of at least one fatty acid. A fatty acid component may comprise or consist of a mixture of fatty acid. As used herein, a fatty acid means a monocarboxylic acid having a fatty chain, i.e. a hydrocarbyl (non-cyclic) chain comprising from 10 to 60, in particular 12 to 55, more specifically 14 to 50, consecutive carbon atoms. A fatty acid can be saturated or unsaturated.

In a preferred embodiment, component a) is substantially free of a monohydroxylated monoacid component. A monohydroxylated monoacid component comprises or consists of at least one monohydroxylated monoacid. A monohydroxylated monoacid component may comprise or consist of a mixture of monohydroxylated monoacids. As used herein, a monohydroxylated monoacid means a monocarboxylic acid bearing a single hydroxyl group or a derivative thereof (i.e. a compound which can be hydrolyzed to generate a monohydroxylated monoacid in situ). Examples of a monohydroxylated monoacid include lactic acid, glycolic acid, a lactide, a glycolide, a lactone.

In a preferred embodiment, component a) is a substantially linear polyester. Accordingly, component a) comprises less than 5 mol%, less than 4 mol%, less than 3 mol%, less than 2 mol%, less than 1 mol% or even 0 mol%, of branching component. A branching component comprises or consists of at least one branching compound. A branching component may comprise or consist of a mixture of branching compounds. As used herein, a branching compound is a compound bearing at least three functional groups selected from a carboxylic acid functional group or a derivative thereof, a hydroxyl functional group and mixtures thereof. Accordingly, the acid and hydroxyl functionality of the branching component is at least 3. Examples of branching compounds are as disclosed above for components a12) and a22).

The number of moles of component a) used to obtain the branched polyester may be from 80 to 91 % based on the total number of moles of components a) + b). For example, the number of moles of component b) may be from 81 to 91%, in particular from 82 to 90.5%, more particularly from 84 to 90%, even more particularly from 85 to 89%, more particularly still

from 86 to 88%, based on the total number of moles of components a) + b).

The amount of component a) used to obtain the branched polyester of the invention may be from 70 to 86%, in particular from 75 to 85%, more particularly from 79 to 82%, by weight based on the total weight of components a) + b).

Hydroxylated branching polyacid component

Another component used to obtain the branched polyester of the invention is a hydroxylated branching polyacid component, also referred to as component b). Without willing to be bound by theory, it is believed the hydroxylated branching polyacid component improves the reactivity of the branched polyester and enhances the chemical resistance of the coating obtained by curing the branched polyester.

Component b) is reacted with component a). In particular, component b) is reacted with component a) after component a) has been obtained by polymerization of components a1) and a2).

A hydroxylated branching polyacid component comprises or consists of at least one hydroxylated branching polyacid. A hydroxylated branching polyacid component may comprise or consist of a mixture of hydroxylated branching polyacids. As used herein, a hydroxylated branching polyacid is a compound bearing at least three carboxylic acid functional groups and a least one hydroxyl functional group or a derivative thereof (i.e. a compound bearing functional groups which can be hydrolyzed to generate at least three carboxylic acid functional groups and a least one hydroxyl functional group in situ, such as cyclic anhydrides and mono-, di- or tri(C1-C6 alkyl) esters). Accordingly, the acid functionality of the hydroxylated branching polyacid component is at least 3 and the hydroxyl functionality of the hydroxylated branching polyacid component is at least 1.

Component b) may comprise at least one hydroxylated branching polyacid selected from the group consisting of citric acid, isocitric acid, derivatives thereof (such as citric anhydride, isocitric anhydride and esters of citric acid or isocitric acid, in particular C1-alkyl monoesters of citric acid or isocitric acid, C2-alkyl monoesters of citric acid or isocitric acid, C1-alkyl diesters of citric acid or isocitric acid, C2-alkyl diesters of citric acid or isocitric acid, C1-alkyl-C2-alkyl diesters of citric acid or isocitric acid, C1-alkyl triesters of citric acid or isocitric acid, C2-alkyl triesters of citric acid or isocitric acid, C1-alkyl-C2-alkyl triesters of citric acid or isocitric acid), and mixtures thereof, preferably citric acid or isocitric acid, more preferably citric acid.

The number of moles of component b) used to obtain the branched polyester is from 9 to 20% based on the total number of moles of components a) + b). For example, the number of moles of component b) may be from 9 to 19%, in particular from 9.5 to 18%, more particularly from 10 to 16%, even more particularly from 11 to 15%, more particularly still from 12 to 14%, based on the total number of moles of components a) + b).

The number of moles of component b) may be at least 5% based on the total number of moles of components a2) + b). For example, the number of moles of component b) may be from 5 to 50%, in particular from 15 to 40%, more particularly from 20 to 30%, based on the total number of moles of components a2) + b).

The ratio between the number of moles of component b) and the number of moles of component a1) may be lower than 0.33. For example, the ratio between the number of moles of component b) and the number of moles of component a1) may be from 0.15 to 0.32, in particular from 0.20 to 0.31, more particularly from 0.25 to 0.30.

The ratio between the number of moles of component a2) and the number of moles of component b) may at least 1. For example, the ratio between the number of moles of component a2) and the number of moles of component b) may be from 1 to 5, in particular from 1.5 to 4.5, more particularly from 2 to 4.

The ratio between the number of moles of components a) + b) and the number of moles of components a1) + b) may be higher than 1.4. For example, the ratio between the number of moles of components a) + b) and the number of moles of components a1) + b) may be from 1.45 to 2, in particular from 1.50 to 1.90, more particularly from 1.55 to 1.80.

The ratio between the number of moles of components a) + b) and the number of moles of components a2) + b) may be higher than 1.4. For example, the ratio between the number of moles of components a) + b) and the number of moles of components a2) + b) may be from 1.50 to 2.30, in particular from 1.75 to 2.20, more particularly from 1.80 to 2.10.

The amount of component b) used to obtain the branched polyester of the invention may be from 14 to 30%, in particular from 15 to 25%, more particularly from 18 to 21%, by weight based on the total weight of components a) + b).

Features of the branched polyester

The branched polyester resulting from the reaction of components a) and b) as detailed above may exhibit one or more of the following features.

The branched polyester of the invention may be in the form of a solid at 25°C, preferably in the form of an amorphous solid at 25°C. Accordingly, the branched polyester may not be in the form of a solution or a dispersion of polyester particles in a liquid phase, such as an organic solvent or water. Preferably, the branched polyester may comprise less than 10%, in particular less than 5%, more particularly less than 1%, even more particularly less than 0.1%, by weight of water based on the total weight of the branched polyester. More preferably, the branched polyester may comprise less

than 10%, in particular less than 5%, more particularly less than 1%, even more particularly less than 0.1%, by weight of organic solvent based on the total weight of the branched polyester.

The branched polyester of the invention may not be hydrosoluble (i.e. soluble in water at 25°C).

The branched polyester of the invention may not be hydrodispersable (i.e. dispersable in water at 25°C). Accordingly, the COOH groups of the branched polyester are not in salt form (i.e. by neutralization with a base such as alkali metal salt, ammonia or a tertiary amine).

The branched polyester of the invention may be a saturated branched polyester optionally bearing one or more aromatic rings. Accordingly, the branched polyester may not comprise any ethylenic unsaturations (i.e. polymerizable carbon-carbon double bonds). In other words, the only carbon-carbon double bonds of the branched polyester are contained in one or more aromatic rings.

The branched polyester of the invention may not comprise urethane bonds.

The branched polyester of the invention may have an acid value of from 60 to 130 mg KOH/g, preferably from 70 to 120 mg KOH/g, more preferably from 80 to 110 mg KOH/g.

The branched polyester of the invention may have a hydroxyl value from 30 to 70 mg KOH/g, preferably from 35 to 65 mg KOH/g, more preferably from 40 to 60 mg KOH/g.

The branched polyester of the invention may have a hydroxyl value that is lower than the acid value. For example, the difference between the hydroxyl value and the acid value may be at least 10 mg KOH/g, in particular at least 20 mg KOH/g, more particularly at least 30 mg KOH/g.

The branched polyester may have a molar ratio of OH groups to COOH groups that is lower than 1, in particular from 0.9 to 0.99, more particularly from 0.92 to 0.98, even more particularly from 0.94 to 0.97. As used herein, the number of moles of OH groups of the branched polyester corresponds to the total number of moles of OH groups in the components used to form the polyester, i.e. to the total number of moles of OH groups in the polyol component a1), the polyacid component a2) and the hydroxylated branching polyacid component b). As used herein, the number of moles of COOH groups of the branched polyester corresponds to the total number of moles of COOH groups (or derivatives thereof such as anhydride and/or ester groups) in the components used to form the polyester, i.e. to the total number of moles of COOH groups (or derivatives thereof) in the polyol component a1), the polyacid component a2) and the hydroxylated branching polyacid component b).

The branched polyester of the invention may have a number average molecular weight Mn from 1,000 to 10,000 g/mol, preferably from 1,500 to 8,000 g/mol, more preferably from 2,000 to 6,000 g/mol, even more preferably from 2,400 to 5,000 g/mol.

The branched polyester of the invention may have a polydispersity D (Mw/Mn) from 0.4 to 26, preferably from 0.8 to 25, more preferably from 1.2 to 24, even more preferably from 1.6 to 23.

The branched polyester of the invention may have a glass transition temperature Tg from 40 to 80°C, preferably from 45 to 75°C, more preferably from 50 to 65°C.

The branched polyester of the invention may have a melt viscosity from 3 to 30 Pa·s at 165°C.

Preparation process of the branched polyester

The branched polyester of the invention may be obtained by reacting components a) and b).

In particular, the branched polyester of the invention may be obtained with the following successive steps:

i) forming a hydroxyl-functionalized polyester component a);

ii) reacting component a) with a hydroxylated branching polyacid component b) wherein the number of moles of component b) is at least 9,0% based on the total number of moles of components a) + b).

Components a) and b) may be as described above.

The above process may lead to a branched carboxyl-functionalized polyester and optionally a residual amount of component b).

In step i), component a) may be formed by reacting a polyol component a1) and a polyacid component a2). Components a1) and a2) may be as described above. The reaction may be conducted by heating components a1) and a2) at a temperature of 135°C to 250°C, optionally in the presence of an esterification catalyst and/or a stabilizer. Examples of suitable esterification catalysts include dibutyltin oxide, dibutyltin dilaurate, n-butyltin trioctoate, sulphuric acid or a sulphonic acid, tetraisopropyl titanate or tetra-n-butyl titanate. The amount of esterification catalyst may be from 0.02 to 1.50% by weight based on the weight of components a1) + a2). Examples of suitable stabilizers include phenolic antioxidants such as Irganox 1010 (Ciba) or phosphonite- and phosphite-type stabilizers such as tris(nonylphenyl) phosphite and triphenylphosphite. The amount of stabilizer may be from 0 to 1% by weight based on the total weight of components a1) + a2).

Step i) may be carried out by gradually increasing the heating temperature, for example from about 130°C to

about 190 to 250°C, first under normal pressure, then, when necessary, under reduced pressure. These operating conditions may be maintained until a polyester having the desired hydroxyl value and/or acid value is obtained. The degree of esterification may be followed by determining the amount of water formed in the course of the reaction and the properties of the obtained polyester, for example the hydroxyl value, the acid value, the molecular weight or the viscosity.

In particular, step i) may be carried out until component a) has an acid value of from 6 to 50 mg KOH/g, preferably from 8 to 45 mg KOH/g, more preferably from 10 to 40 mg KOH/g.

In step ii), the reaction may be carried out by adding component b) in the mixture obtained at the end of step i) and heating at a temperature of 150°C to 170°C. The water formed during the esterification reaction may be removed by distillation, under vacuum or with an azeotrope-forming solvent. These operating conditions may be maintained until a polyester having the desired hydroxyl value and/or acid value is obtained. The degree of esterification may be followed by determining the amount of water formed in the course of the reaction and the properties of the obtained polyester, for example the hydroxyl value, the acid value, the molecular weight or the viscosity.

The number of moles of component b) may be from 9 to 20%, in particular from 9,5 to 18%, more particularly from 10 to 16%, even more particularly from 11 to 15%, more particularly still from 12 to 14%, based on the total number of moles of components a) + b).

The polyester obtained in step ii) may have an acid value of from 85 to 115 mg KOH/g, preferably from 90 to 110 mg KOH/g, more preferably from 95 to 105 mg KOH/g.

The polyester obtained in step ii) may have a hydroxyl value of from 30 to 65 mg KOH/g, preferably from 35 to 60 mg KOH/g, more preferably from 40 to 55 mg KOH/g.

The process may further comprise an optional step iii) of adding one or more additives selected from antioxidants, stabilizers, and combinations thereof..

The process provides good control of the acid functionality and polydispersity of the polyester and provides good flow properties combined with low crosslinking functionality and good film forming properties.

## Coating composition

The branched polyester according to the invention may be used in a coating composition, preferably in a powder coating composition, more preferably in a crosslinkable powder coating composition. The branched polyester may especially be used as a binder in such coating compositions.

Accordingly, another object of the invention relates to a coating composition comprising

- the branched polyester according to the invention;
- a crosslinking component;
- optionally a catalyst;
- optionally one or more additives.

The coating composition of the invention comprises the branched polyester as described above.

The total amount of branched polyester in the coating composition of the invention may be from 20 to 80%, preferably from 25 to 75%, more preferably 30 to 70% by weight based on weight of the coating composition.

The coating composition of the invention comprises a crosslinking component.

A crosslinking component comprises or consists of at least one crosslinking compound. A crosslinking component may comprise or consist of a mixture of crosslinking compounds. A crosslinking compound is a compound bearing at least two functional groups which are reactive towards the functional groups present in the branched polyester, in particular towards the carboxylic acid functional groups present in the branched polyester. For example, a crosslinking compound may bear at least two functional groups selected from epoxide or hydroxyl, preferably at least two epoxide functional groups.

In one embodiment, the crosslinking component comprises at least one epoxy resin. An epoxy resin may be defined as a compound bearing at least two epoxide functional groups.

The epoxy resin may have an epoxide equivalent weight (EEW) from 400 to 1000 g/eq, in particular from 500 to 900 g/eq, more particularly from 600 to 850 g/eq, even more particularly from 700 to 800 g/eq.

The epoxy resin may be solid at 25°C. The epoxy resin may have a low melt viscosity to facilitate its extrusion in admixture with other components of the coating composition, preferably at temperatures below 200°C. For example, the epoxy resin may have a melt viscosity from 0.2 to 6 Pa·s at 150°C and preferably from 0.3 to 5 Pa·s at 150°C.

The epoxy resin may be selected from a glycidyl ether resin or triglycidylisocyanurate, in particular a glycidyl ether resin based on bisphenol A or bisphenol F.

Preferred epoxy resins for the purposes of this invention are bisphenol A epoxy resins, such as those sold under the trademarks ARALDITE® GT-7004, GT-7071, GT-7072 or GT-6259 (Huntsman LLC) or EPON® 1001 and 2042 (Shell Chemicals, Inc.).

The mixing ratio of the branched polyester and the epoxy resin is generally chosen such that the ratio of carboxyl functional groups of the branched polyester to epoxide functional groups of the epoxy resin is from 0.9:1.1 to 1.1:0.9.

In another embodiment, the crosslinking component comprises a β-hydroxyalkylamide.

The β-hydroxyalkylamide may have at least two hydroxyl groups. The β-hydroxyalkylamide may be according to the following formula (I):

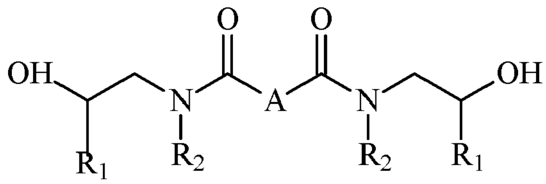

(I)

wherein:

A is an organic group derived from a saturated or unsaturated, aliphatic, cycloaliphatic or aromatic hydrocarbon group having from 1 to 24 carbon atoms, preferably A is a C2-C12 alkylene;
each $R_1$ is independently hydrogen or a C1-C5 alkyl, preferably each $R_1$ is independently hydrogen or methyl;
each $R_2$ is independently hydrogen, a C1-C5 alkyl or$-CH_2-CH(Ri)-OH$, preferably each $R_2$ is $-CH_2-CH(R_1)-OH$.

Examples of suitable β-hydroxyalkylamides include N,N,N',N'-tetrakis(2-hydroxyethyl)adipamide (Primid XL552 from EMS) and N,N,N',N'-tetrakis(2-hydroxypropyl)adipamide (Primid QM1260 from EMS).

The mixing ratio of the branched polyester and the β-hydroxyalkylamide is generally chosen such that the ratio of carboxyl functional groups of the branched polyester to hydroxyl functional groups of the β-hydroxyalkylamide is from 0.9:1.1 to 1.1:0.9.

The total amount of crosslinking component in the coating composition of the invention may be from 3 to 50%, preferably from 4 to 45%, more preferably 4.5 to 40% by weight based on weight of the coating composition. When the crosslinking component is an epoxy resin, the total amount of crosslinking component may be from 20 to 50% by weight, based on weight of the coating composition. When the crosslinking component is a β-hydroxyalkylamide, the total amount of crosslinking component may be from 4 to 15% by weight, based on weight of the coating composition.

The coating composition of the invention may optionally comprise a curing catalyst.

A curing catalyst is preferably present when the crosslinking component comprises an epoxy resin. A curing catalyst may not be required when the crosslinking component comprises a β-hydroxyalkylamide.

The curing catalyst may be selected from the group consisting of quaternary ammonium salts (e.g. tetrabutylammonium bromide or tetrapropylammonium chloride), quaternary phosphonium salts (e.g. ethyltriphenylphosphonium bromide or tetrapropylphosphonium chloride), tertiary amines (e.g. 2-phenylimidazoline), tertiary phosphines (e.g. triphenylphosphine) and mixtures thereof.

The degree and the rate of crosslinking may depend in part on the amount of curing catalyst. The amount of curing catalyst should not be too high to allow sufficient time for flow and film formation and it should not be too low because that would result in low crosslinking density and poorer mechanical properties. The catalytic activity is best reflected by the resulting gel time. Gel time of the composition corresponds to the time after the beginning of the crosslinking reaction at which the viscosity rises such that the material ceases to be free flowing.

In general, good balance of properties can be achieved with gel times between 100 and 800 sec at the curing temperature of 130-140°C. The amount of curing catalyst is preferably chosen to obtain a gel time of 70-600 seconds, preferably 80-500 seconds, more preferably 90-400 seconds and more preferably 100 to 300 seconds, at a curing temperature of 140°C, on a composition having a ratio R of 1.0 wherein R is defined as the ratio of moles of carboxylic acid groups in branched polyester to moles of epoxide functional groups in the epoxy resin.

When present, the total amount of catalyst in the coating composition of the invention may be from 0.1 to 10%, preferably from 0.3 to 5%, more preferably from 0.4 to 2.5%, by weight based on weight of the coating composition.

The coating composition may further comprise one or more additives selected from pigments and dyes, flow agents and levelling agents, degassing agents, UV absorbers, antioxidants and stabilizers, electrostatic additives, waxes and combinations thereof.

Examples of suitable pigments and dyes include metallic oxides (e.g. titanium dioxide, iron oxide or zinc oxide), metal hydroxides, metal powders, sulphides, sulphates, carbonates, silicates (e.g. ammonium silicate), carbon black, talc, china clay, barytes, iron blues, lead blues, organic reds and organic maroons.

Flow and levelling agents may be used to improve the melt-flow properties of the composition and reduce surface defects in the final coating. Examples of suitable flow agents and levelling agents include (meth)acrylic polymers and

fluorine polymers such as BYK-360 P, BYK-361 and BYK-300 (Byk Chemie), Resiflow® PV5, Resiflow® P-67 and Resiflow® P-200 (Worlee), Modaflow® (Allnex) and Acronal® 4F (BASF).

A degassing agent may be used to remove the gas and/or water entrapped in the composition and reduce surface defects in the final coating. An example of a suitable degassing agent is benzoin.

Examples of suitable UV absorbers, antioxidants and stabilizers include benzotriazoles such Tinuvin® 900 (Ciba), UV-234 PD and UV-928 PD (MPI Chemie), hindered amine light stabilizers such as Tinuvin® 144 (Ciba), LS-119 and LS-4050 (MPI Chemie), other stabilizing agents such as Tinuvin® 312 and 1130 (Ciba), antioxidants such as Irganox® 1010 (Ciba) and phosphonite or phosphite stabilizers such as tris(nonylphenyl)phosphite and triphenylphosphite.

An electrostatic additive may be used to enhance the electrostatic chargeability of the coating composition, in particular when the coating composition is intended to be applied on the surface of the substrate using a triboelectric process (i.e. with a triboelectric spray gun that generates electrically charged particles by friction).

Examples of suitable electrostatic additives include a trialkylamine (for instance triethylamine, tributylamine, tris(isobutyl)amine, tris(2-ethylhexyl)amine, N,N-dimethyl-3-amino-2,4-dimethylpentane), a sterically hindered amine (for instance an optionally substituted 2,2,6,6,-tetramethyl-4-piperidyl), a sterically hindered amino-alcohol (for instance tert-butyldiethanol amine or diisopropylethanolamine), an aromatic amine (for instance melamine, benzoguanamine, melem, melam), a ureido-functionalized compound (such as urea, ureidomelamine and polyurea).

Examples of suitable waxes include polyethylene wax, polypropylene wax and polyamide wax.

The total amount of additives in the coating composition of the invention may be from 0 to 30% by weight based on weight of the coating composition.

The coating composition may be a powder coating composition. As used herein, the term "powder coating composition" means a composition that is in free-flowing particulate (solid) form at a temperature of 25°C. In particular, the coating composition may be in the form of flakes or pellets or in the form of a powder which preferably has a volume median diameter Dv50 of from 10 to 250 $\mu$m, more preferably from 30 to 150 $\mu$m, as determined by laser granulometry.

Another object of the present invention is a preparation process of the coating composition.

The coating composition of the invention may be prepared by melt-blending the ingredients of the coating composition. The melt-blending step may be carried out in an extruder. The melt-blending step should be carried out under conditions to avoid premature curing of the coating composition (i.e. by carrying out the melt-blending step at a temperature that is lower than the curing temperature of the coating composition and/or by limiting the duration of the melt-blending step). The melt-blending step may be carried out at a temperature of from 80°C to 120°C. The melt-blending step may be carried out for less than 5 minutes. Prior to the melt-blending step, the process may comprise an optional step of pre-blending the ingredients of the coating composition. The pre-blending step may be carried out in a mixer, in particular a high shear mixer or a high-intensity dry mixer. The pre-blending step may be carried out at a temperature of 20 to 25°C. After the melt-blending step, the resulting mixture may be cooled to a temperature of 20 to 25°C and subsequently transformed into flakes, pellets or a powder. The coating composition can subsequently be applied on at least part of a surface of a substrate and cured so as to form a coated substrate as detailed below.

## Coating and coated substrate

The coating composition of the invention may be used to obtain a coating.

Accordingly, another object of the present invention is a coating obtained by curing the coating composition according to the invention.

The curing may be carried out by heating the coating composition at a temperature of from 120 to 200°C, in particular from 125 to 195°C, more particularly from 130 to 190°C, even more particularly from 135 to 185°C, more particularly still from 140 to 180°C. The heating may be carried out for a period of 1 to 60 minutes, preferably 5 to 30 minutes.

Due to the enhanced reactivity of the coating composition of the invention, the coating composition may be fully cured by heating at a temperature that is lower than that of conventional coating compositions. In a preferred embodiment, the curing may be conducted by heating the coating composition at a temperature of from 120 to 160°C, preferably from 120 to 155°C, more preferably from 120 to 150°C, even more preferably from 120 to 145°C and most preferably from 120 to 140°C.

Another object of the present invention is a substrate that is fully or partially coated with the coating according to the invention.

The substrate may be any type of substrate, such as a cellulosic substrate (e.g. hardwood, a particleboard or a fiberboard), a plastic substrate, a composite substrate or a metallic substrate.

Due to the enhanced reactivity and the reduced curing temperature of the coating composition of the invention, a broad diversity of substrates may be coated with the coating according to the invention.

In particular, the substrate may be a heat-sensitive substrate. As used herein, a heat-sensitive substrate is a substrate that is at least partially degraded if heated at a temperature that is higher than 160°C, preferably higher than

155°C, more preferably higher than 150°C, even more preferably higher than 145°C and most preferably higher than 140°C.

Another object of the present invention is a process for coating a substrate comprising the following steps:

- applying the coating composition according to the invention on at least part of a surface of a substrate; and
- curing the coating composition.

The application step may be conducted by electrostatic spraying or by the use of a fluidized bed. Electrostatic spraying is preferred. The coating composition can be applied in one pass or in several passes to provide a film thickness after cure of 10 to 120 μm. The substrate can optionally be preheated prior to application of the coating composition. The preheating step may promote a more uniform deposition of the coating composition on the substrate. The substrate may be as detailed above. The curing step may be conducted as detailed above.

## ASPECTS

The invention may be according to one of the followings Aspects.

Aspect 1. A branched polyester obtained by reacting:

a) a hydroxyl-functionalized polyester component based on a polyol component a1) and a polyacid component a2); and

b) a hydroxylated branching polyacid component having an acid functionality of at least 3 and a hydroxyl functionality of at least 1;

wherein the number of moles of component b) is from 9 to 20% based on the total number of moles of components a) + b).

Aspect 2. The branched polyester according to Aspect 1, wherein the branched polyester is obtained by reacting components a) and b) so that at least part of the units derived from component b) are non-terminal units.

Aspect 3. The branched polyester according to Aspect 1 or 2, wherein the branched polyester is obtained by reacting components a) and b) so that the branched polyester comprises at least one unit represented by the following formula:

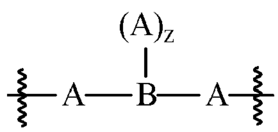

wherein

each A is independently a unit derived from component a)
each B is in a unit derived from component b)
z is 0 or 1.

Aspect 4. The branched polyester according to Aspects 1 to 3, wherein component a) has a hydroxyl value of from 80 to 200 mg KOH/g, preferably from 90 to 195 mg KOH/g, more preferably from 100 to 190 mg KOH/g.

Aspect 5. The branched polyester according to Aspects 1 to 4, wherein component a) has an acid value of from 6 to 80 mg KOH/g, preferably from 8 to 60 mg KOH/g, more preferably from 10 to 40 mg KOH/g.

Aspect 6. The branched polyester according to any one of Aspects 1 to 5, wherein component a) is based on:

a1) a polyol component comprising a11) a diol component and optionally a12) a branching polyol component having a hydroxyl functionality of at least 3; and

a2) a polyacid component comprising a21) a diacid component and optionally a22) a branching polyacid component having an acid functionality of at least 3.

Aspect 7. The branched polyester according to Aspect 6, wherein component a11) comprises or consists of at least one diol selected from the group consisting of neopentyl glycol, ethylene glycol, diethylene glycol, 1,2- or 1,3-propanediol, 1,2-, 1,3- or 1,4-butanediol, 1,5-pentanediol, 1,6-hexanediol, bisphenol A, hydrogenated bisphenol A, an alkoxylated bisphenol A and combinations thereof.

Aspect 8. The branched polyester according to Aspect 6 or 7, wherein component a11) is substantially free of isosorbide.

Aspect 9. The branched polyester according to any one of Aspects 6 to 8, wherein component a11) is substantially free of a cycloaliphatic diol.

Aspect 10. The branched polyester according to any one of Aspects 6 to 9, wherein component a11) is substantially free of an aromatic diol.

Aspect 11. The branched polyester according to any one of Aspects 6 to 10, wherein component a11) is substantially free of a cyclic diol.

Aspect 12. The branched polyester according to any one of Aspects 6 to 11, wherein component a12) comprises at least one branching polyol selected from trimethylolpropane, glycerol, tris(2-hydroxyethyl) isocyanurate, di(trimethylolpropane), pentaerythritol and combinations thereof.

Aspect 13. The branched polyester according to any one of Aspects 6 to 12, wherein component a1) is free of component a12).

Aspect 14. The branched polyester according to any one of Aspects 6 to 12, wherein component a1) comprises component a12) and the amount of component a12) is from 0.001 to 10%, in particular from 0.2 to 5%, more particularly from 0.3 to 1%, by weight based on the weight of component a1).

Aspect 15. The branched polyester according to any one of Aspects 6 to 14, wherein component a1) is substantially free of a polyol selected from oligosaccharides, polysaccharides, modified oligosaccharides, modified polysaccharides, polyvinyl alcohols or mixtures thereof.

Aspect 16. The branched polyester according to any one of Aspects 6 to 15, wherein component a1) comprises less than 50 mol% of an aliphatic diol having a hydroxyl group bound to a secondary carbon atom, based on the number of moles of component a1).

Aspect 17. The branched polyester according to any one of Aspects 6 to 16, wherein component a1) represents from 25 to 65%, in particular from 30 to 60%, more particularly from 35 to 45%, of the total weight of component a).

Aspect 18. The branched polyester according to any one of Aspects 6 to 17, wherein component a1) represents 50 to 70%, in particular from 51 to 65%, more particularly from 52 to 60%, of the total number of moles of component a).

Aspect 19. The branched polyester according to any one of Aspects 6 to 18, wherein component a21) comprises at least one diacid selected from the group consisting of terephthalic acid, isophthalic acid, succinic acid, adipic acid, sebacic acid, azelaic acid, derivatives thereof and combinations thereof.

Aspect 20. The branched polyester according to any one of Aspects 6 to 19, wherein component a2) is free of citric acid, isocitric acid, derivatives thereof and mixtures thereof.

Aspect 21. The branched polyester according to any one of Aspects 6 to 20, wherein component a2) is free of component a22).

Aspect 22. The branched polyester according to any one of Aspects 6 to 20, wherein component a2) comprises component a22) and the amount of component a22) is from 0.001 to 2%, in particular from 0.1 to 1%, more particularly from 0.3 to 1%, by weight based on the weight of component a2).

Aspect 23. The branched polyester according to any one of Aspects 6 to 22, wherein component a2) comprises at least 20 mol% of cyclic polyacids or derivatives thereof, based on the total number of moles of component a2).

Aspect 24. The branched polyester according to any one of Aspects 6 to 23, wherein component a2) comprises at least 20 mol% of aromatic polyacids or derivatives thereof, based on the total number of moles of component a2).

Aspect 25. The branched polyester according to any one of Aspects 6 to 24, wherein component a2) comprises up to 20 mol% of aliphatic polyacids or derivatives thereof, based on the total number of moles of component a2).

Aspect 26. The branched polyester according to any one of Aspects 6 to 25, wherein component a2) represents from 35 to 75%, in particular from 40 to 70%, more particularly from 55 to 65%, of the total weight of component a).

Aspect 27. The branched polyester according to any one of Aspects 6 to 26, wherein component a2) represents from 30 to 50%, in particular from 35 to 49%, more particularly from 40 to 48%, of the total number of moles of component a).

Aspect 28. The branched polyester according to any one of Aspects 1 to 27, wherein component a) is substantially free of a fatty acid component.

Aspect 29. The branched polyester according to any one of Aspects 1 to 28, wherein component a) is substantially free of a monohydroxylated monoacid component.

Aspect 30. The branched polyester according to any one of Aspects 1 to 29, wherein component a) is a substantially linear polyester.

Aspect 31. The branched polyester according to any one of Aspects 1 to 30, wherein the number of moles of component a) is from 80 to 91% based on the total number of moles of components a) + b).

Aspect 32. The branched polyester according to any one of Aspects 1 to 31, wherein the amount of component a) is from 70 to 86%, in particular from 75 to 85%, more particularly from 79 to 82%, by weight based on the total weight of components a) + b).

Aspect 33. The branched polyester according to any one of Aspects 1 to 32, wherein component b) comprises at least one hydroxylated branching polyacid selected from the group consisting of citric acid, isocitric acid, derivatives

thereof and mixtures thereof, preferably citric acid or isocitric acid, more preferably citric acid.

Aspect 34. The branched polyester according to any one of Aspects 1 to 33, wherein the number of moles of component b) is from 9 to 19%, in particular from 9.5 to 18%, more particularly from 10 to 16%, even more particularly from 11 to 15%, more particularly still from 12 to 14%, based on the total number of moles of components a) + b).

Aspect 35. The branched polyester according to any one of Aspects 1 to 34, wherein the number of moles of component b) is at least 5% based on the total number of moles of components a2) + b).

Aspect 36. The branched polyester according to any one of Aspects 1 to 35, wherein the ratio between the number of moles of component b) and the number of moles of component a1) is lower than 0.33.

Aspect 37. The branched polyester according to any one of Aspects 1 to 36, wherein the ratio between the number of moles of component a2) and the number of moles of component b) is least 1.

Aspect 38. The branched polyester according to any one of Aspects 1 to 37, wherein the ratio between the number of moles of components a) + b) and the number of moles of components a1) + b) is higher than 1.4.

Aspect 39. The branched polyester according to any one of Aspects 1 to 38, wherein the ratio between the number of moles of components a) + b) and the number of moles of components a2) + b) is higher than 1.4.

Aspect 40. The branched polyester according to any one of Aspects 1 to 39, wherein the amount of component b) is from 14 to 30%, in particular from 15 to 25%, more particularly from 18 to 21%, by weight based on the total weight of components a) + b).

Aspect 41. The branched polyester according to any one of Aspects 1 to 40, wherein the branched polyester is in the form of a solid at 25°C, preferably in the form of an amorphous solid at 25°C.

Aspect 42. The branched polyester according to any one of Aspects 1 to 41, wherein the branched polyester is not hydrosoluble.

Aspect 43. The branched polyester according to any one of Aspects 1 to 42, wherein the branched polyester is not hydrodispersable.

Aspect 44. The branched polyester according to any one of Aspects 1 to 43, wherein the COOH groups of the branched polyester are not in salt form.

Aspect 45. The branched polyester according to any one of Aspects 1 to 44, wherein the branched polyester is a saturated branched polyester optionally bearing one or more aromatic rings.

Aspect 46. The branched polyester according to any one of Aspects 1 to 45, wherein the branched polyester does not comprise urethane bonds.

Aspect 47. The branched polyester according to any one of Aspects 1 to 46, wherein the branched polyester has an acid value of from 60 to 130 mg KOH/g, preferably from 70 to 120 mg KOH/g, more preferably from 80 to 110 mg KOH/g.

Aspect 48. The branched polyester according to any one of Aspects 1 to 47, wherein the branched polyester has a hydroxyl value from 30 to 70 mg KOH/g, preferably from 35 to 65 mg KOH/g, more preferably from 40 to 60 mg KOH/g.

Aspect 49. The branched polyester according to any one of Aspects 1 to 48, wherein the branched polyester has a hydroxyl value that is lower than the acid value.

Aspect 50. The branched polyester according to Aspect 49, wherein the difference between the hydroxyl value and the acid value of the branched polyester may be at least 10 mg KOH/g, in particular at least 20 mg KOH/g, more particularly at least 30 mg KOH/g.

Aspect 51. The branched polyester according to any one of Aspects 1 to 50, wherein the branched polyester has a molar ratio of OH groups to COOH groups that is lower than 1, in particular from 0.9 to 0.99, more particularly from 0.92 to 0.98, even more particularly from 0.94 to 0.97.

Aspect 52. The branched polyester according to any one of Aspects 1 to 51, wherein the branched polyester has a number average molecular weight Mn from 1,000 to 10,000 g/mol, preferably from 1,500 to 8,000 g/mol, more preferably from 2,000 to 6,000 g/mol, even more preferably from 2,400 to 5,000 g/mol.

Aspect 53. The branched polyester according to any one of Aspects 1 to 52, wherein the branched polyester has a polydispersity D (Mw/Mn) from 0.4 to 26, preferably from 0.8 to 25, more preferably from 1.2 to 24, even more preferably from 1.6 to 23.

Aspect 54. The branched polyester according to any one of Aspects 1 to 53, wherein the branched polyester has a glass transition temperature Tg from 40 to 80°C, preferably from 45 to 75°C, more preferably from 50 to 65°C.

Aspect 55. The branched polyester according to any one of Aspects 1 to 54, wherein the branched polyester has a melt viscosity from 3 to 30 Pa·s at 165°C.

Aspect 56. Use of the branched polyester according to any one of Aspects 1 to 55, in a coating composition, preferably in a powder coating composition, more preferably in a crosslinkable powder coating composition.

Aspect 57. A coating composition comprising

- the branched polyester according to any one of Aspects 1 to 56;
- a crosslinker component;
- optionally a catalyst;

- optionally one or more additives.

Aspect 58. The coating composition according to Aspect 57, wherein the crosslinking component comprises at least one epoxy resin, in particular at least one epoxy resin selected from a glycidyl ether resin or triglycidylisocyanurate, more particularly a glycidyl ether resin based on bisphenol A or bisphenol F.
Aspect 59. A coating obtained by curing the coating composition according to Aspect 57 or 58.
Aspect 60. The coating according to Aspect 59, wherein the curing is conducted by heating the coating composition at a temperature of from 120 to 200°C, in particular from 125 to 195°C, more particularly from 130 to 190°C, even more particularly from 135 to 185°C, more particularly still from 140 to 180°C.
Aspect 61. A substrate fully or partially coated with the coating according to Aspect 59 or 60.
Aspect 62. The substrate according to Aspect 61, wherein the substrate is a heat-sensitive substrate.
Aspect 63. A process for coating a substrate comprising the following steps:

- applying the coating composition according to Aspect 57 or 58 on at least part of a surface of a substrate; and
- curing the coating composition.

The present invention is further illustrated by, but not limited to, the following examples.

## EXAMPLES

### Test Methods

The test methods used in the present invention are detailed below.

Acid Value (AV)

A quantity of resin is accurately weighed out into a 250 mL conical flask. 50-60 mL of solvent (freshly neutralized dimethylformamide) is then added. The solution is heated gently until the resin is entirely dissolved and ensuring the solution does not boil. The solution is cooled down to room temperature, few drops of phenolphthalein indicator are added and finally titrated with standard potassium hydroxide until the end point is reached (appearance of pale pink color, ideally matching that in the stock bottle solution). The acid value is calculated according to the following formula:

$$\text{Acid Value (mg KOH/g)} = (\text{Titrant (mL)} \times N \times 56.1) / \text{Mass of Resin (g)}$$

where:
N = normality of potassium hydroxide solution

Hydroxyl Value (OHV)

The OHV is determined by manual titration of the prepared blanks and sample flasks. Firstly, the sample is passed through the grinder until a fine powder is obtained. Then, in an erlenmeyer, an approximating up to the milligram, a sample is weighted close to the expected 170/IOH. 25 mL of pyridine are added with a dispenser and the mixture is heated without boiling and stirred until complete dissolution. After that, the mixture is cooled down and 10 mL of the acetylation reagent and 5 mL of the catalyst solution are added with a pipette or a dispenser. The refrigerant is placed in the erlenmeyer and mixtures are hold for 10 minutes in the bath at 100°C, stirring slightly at the beginning to promote the solution of the sample. 4 mL of distilled water are added for the coolant and then the mixture is stirred, keeping the sample in the bath for another additional 5 minutes. The sample is cooled down and 50 mL of dimethylformamide and 10 mL of butyl alcohol neutralized are added by the coolant. When it reaches room temperature, the coolant is removed. Then, the mixture is stirred in order to get a homogeneous solution without precipitate. The sample is then titrated immediately with methanolic potassium hydroxide solution, in the presence of phenolphthalein indicator, until a pale pink end point. Samples and blanks must be done by duplicate and proceed in parallel under the same conditions.
The hydroxyl value (OHV) is then calculated according to the following formula:

$$\text{Hydroxyl Value (OHV)} = ((B - S) \times N \times 56.1) / M + AV$$

where:

B = mL of KOH used for blank titration
S = mL of KOH used for sample titration
N = normality of potassium hydroxide solution
M = sample weight (base resin)
AV= Acid Value of the base resin

Viscosity

Viscosity is determined by measuring the torque caused by a sample placed between a fixed plate and a CONE that rotates at a known speed. Velocity gradients and margin of viscosity for CONES 05 and 06 are the following:

| | SPEED GRADIENT (seg$^{-1}$) | VISCOSITY RANGE (Poises) |
|---|---|---|
| **CONE 5** | 167 - 6667 | 1,50 - 600 |
| **CONE 6** | 167 - 6667 | 3,75 -1500 |

The viscosity was determined using a Brookfield CAP 2000 H+ viscometer, with the possibility of selecting temperatures from 50 up to 200°C and speeds from 50 to 1000 rpm, calibrated according to internal methods.
For viscosity determination of high viscosity polyesters (165°C, 20 seconds), the required cone is selected and correctly fitted depending on the maximum viscosity of the sample.

| | **CONE** | |
|---|---|---|
| **RPM** | **5** | **6** |
| 50 | 600 | 1500 |
| 100 | 300 | 750 |
| 200 | 150 | 375 |
| 300 | 100 | 250 |
| 400 | 75 | 187,5 |
| 500 | 60 | 150 |
| 600 | 50 | 125 |
| 700 | 42,85 | 107,1 |
| 800 | 37,5 | 93,75 |
| 900 | 33,33 | 83,33 |
| 1000 | 30 | 75 |
| 1100 | 27,27 | 68,18 |
| 1200 | 25 | 62,5 |
| 1300 | 23,07 | 57,69 |
| 1400 | 21,42 | 53,57 |
| 1500 | 20 | 50 |
| 1600 | 18,75 | 46,87 |
| 1700 | 17,64 | 44,11 |
| 1800 | 16,66 | 41,66 |
| 1900 | 15,78 | 39,47 |
| 2000 | 15 | 37,5 |

The cone and plate are cleaned using dimethylformamide. The needle is correctly zeroed. A small amount of the resin sample (35 $\pm$ 5 mg) is placed and melted on the heated plate, the cone is lowered (the sample has to protrude 1 mm

around the CONE), as well as the protector (in order to to avoid temperature fluctuations, produced by air currents). A small excess spreads out around the side. Once the device has reached the working temperature and the sample has been thoroughly de-gassed by raising and lowering the cone a several times, the cone rotation button is pressed and a reading is then taken. This process is repeated until a reproducible highest stable reading is obtained.

Resin gel time

A resin sample (approx. 20 - 30g) is taken from the vessel and left to cool to room temperature. The acid value and the viscosity at 165°C of the resin are measured and based on this value, the amount of crosslinking component (Araldite GT-7004) required to give the stoichiometric ratio r = 1, according to r = (equivalents of carboxyl acid groups from the polyester)/(equivalents of epoxy groups from GT-7004), is calculated. The resin and crosslinking component are accurately weighed out and ground together for 1 minute exactly. Care is taken to ensure that the temperature of mix remains close to ambient to avoid impact fusion of the powder. A Coesfeld Material test gel tester is used to determine the resin gel time. Prior to testing, the gel tester is set to 135°C (or 140°C) and the instrument allowed to stabilize at the test temperature. The hot plate is screened to prevent air movement affecting temperature stability.

Once the gel tester temperature has stabilized, a controlled amount of the ground powder is placed into the gel tester hot plate (normally 1g) and the timer is started. As the sample starts to melt, the material is compounded with a metallic cocktail stick using a circular motion. As the sample reacts, the viscosity rises until a point is reached when the material ceases to be free flowing and starts to form a tacky cohesive ball. The end point is reached when the sample is in this condition and is able to detach from the tip of the stick or from the surface of the hot plate. Immediately the timer is stopped and the result is recorded (in seconds). The test is repeated until at least three sets of results are consistent.

Molecular Weight by GPC

Number average molecular weight (Mn) and weight average molecular weight (Mw) and weight distribution of the molecules in non-aqueous polymers and that are soluble in tetrahydrofuran (THF) were determined by molecular size exclusion liquid chromatography technique (GPC, gel permeation chromatography) using a universal calibration.

Using this technique, a solution of polymer in THF + 0.8% acetic acid glacial is injected after 24 hours into a series of chromatographic columns packed with a stationary phase porous membrane that separates molecules according to their molecular size. Separated molecules arrive at the refractive index detector and its signal is recorded as a distribution over time, or elution volume.

GPC was carried out on Agilent Technologies HP 1100 Liquid Chromatograph provided with an automatic sampler G1313A, with Agilent Technologies Chemstation software, G1362A Refractive Index Detector and Waters Styragel Columns HR-1 (100Å pore size, 100 - 5000 Mw range), HR-2 (500Å pore size, 500 - 20000 Mw range) and HR-4 (10000Å pore size, 5000 - 60000 Mw range). Columns were installed in series in order: HR4, HR2 and HR. Carrier liquid (THF) was previously filtered with the filtration kit and filters Millipore FH 0.5 microns with a flow rate of 1 mL/min. The working temperature was 22°C.

A 1% dilution in standard solution is prepared for pure samples and at 2% if was about diluted samples. Then, the solution was filtered with 0.45μ PTFE filters and was placed in a vial of 2mL. 100 μL of the solution were injected into the chromatograph. Thus, a chromatogram and the distribution of molecular weights were obtained from the calibration line.

The calibration was obtained from the pattern kit, which was provided with two series of spatulas (A and B) impregnated each of them with 5 mg of standard polymers. Separately, a spatula of each series was diluted in 2 mL of standard solution, filtered and introduced in a 2 mL vial. 1 μL of styrene PA as marker was added to solution B.100 μL of each solution were injected using the working conditions. A calibration line between 7500000 and 10 was thus obtained.

Tg bv DSC

In amorphous and semicrystalline polymers, the transition from crystal to liquid-viscos status, is characterized by the Glass Transition Temperature (Tg). This value depends on the chemical composition and the molecular weight of the polymer. The DSC technique is used to determine the Tg of a product that involves the sudden increasing in the value of the Specific Heat (Cp), that is manifested in the change from the base line of the DSC graph. This change is measured by device giving a value.

The Tg values reported herein are the inflection point Tg's determined at the inclination point of the DSC curve. The DSC curve was determined using a heating rate of 10°C/min on DSC Mettler Toledo Model 821 using aluminium crucible with lid and without pin (ME-51119870 and ME-51119873).

Samples were weighed directly into a crucible with a precision scale, about 10 mg of sample, which must be grinded so that the contact with the bottom of the crucible be total. The lid was sealed and placed the covered crucible in the automatic sampler. The sampler robot has a built-in needle for drilling the lid.

Impact Test

The impact test was carried out in accordance with ISO 6272-2/ASTM D2794 (Class 1: powder coatings; one- and two-coat) on powder coatings panels on the reverse side, whereas the results are assessed on the coated side using an indenter diameter of 15.9 mm and impact energy 2.5 Nm and using a Sheen Model 806 impact testing machine, 40 inch tubular tester with 15.9 mm (625") indenter and 16.3 mm (640") die.
Panels were prepared as described below. In order to ensure a statistically representative result, each test consists of six impacts across one panel with the coating applied at a consistent thickness of 60-80 μm. The results are quoted as the number of impact domes that show no evidence of coating failure, according to accreditation bodies specifications.

Flexibility (conical mandrel)

Flexibility of a coating was tested in accordance with ASTM D522 - 93a (2008) Standard Test.
Methods for Mandrel Bend Test of Attached Organic Coatings using a Sheen Conical mandrel bend tester. The test panel is clamped onto a varying-radius mandrel and force applied to bend the coated panel. The test panel is then visually examined for evidence of cracking along the deformed surface.

Flexibility (T-bend test)

The standard test method for coating flexibility of prepainted sheet is run in accordance with ASTM D4145-10 (2018).

Weathering

Weathering resistance was assessed using the weatherometer and UV exposure testing.

Solvent Resistance

Evaluation for solvent resistance by solvent rub test - ASTM D5402 - 93 (1999). This test method is used to determine the degree of cure of a baked film by the paint film resistance to a specified solvent.
The solvent rub test is performed using methyl ethyl ketone (MEK) as the solvent. The MEK resistance or degree of cure applies to powder coating paint topcoats and primers.
ASTM D5402 - 93 (1999) involves rubbing the surface of a baked film with a cotton wool pad wetting with MEK until failure or breakthrough of the film occurs. The type of the cotton wool pad, the stroke distance, the stroke rate, and approximate applied pressure of the rub are specified. The rubs are counted as a double rub (one rub forward and one rub backward constitutes a double rub and should take approximately 1 second). This is repeated 100 times or until the coating fails (the coating is rubbed through to the metal surface) if this is sooner. The number of double rubs to rub through, or 200 if no rub through is observed, is noted. The test is used widely in the paint industry because it provides a quick relative estimation of degree of cure without having to wait for long-term exposure results.

Appearance (Visual flow PCI)

To assess flow and appearance, powder coated test panels are compared to a set of Powder Coating Institute standard panels. These panels represent the degrees of smoothness achievable with powder coatings and have graduated degrees of orange peel (flow) and powder smoothness from rough to smooth. The standard panels consists of ten 4x6 inch panels which are black painted and labeled with their corresponding orange peel (flow) rating from 1 to 10. The test panels are compared to the standard panels in order to visually evaluate the appearance of painted test panels. The test panels are assigned the value of flow most closely matching the standard panels.
The appearance is then evaluated on the significant surface. The significant surface shall be defined by the customer and is the part of the total surface which is essential to the appearance and serviceability of the item. Edges, deep recesses and secondary surfaces are not included in the significant surface. The organic coating on the significant surface shall not have any scratches through to the base metal. When the organic coating on the significant surface is viewed at an oblique angle of about 60° to the upper surface, none of the defects listed below shall be visible from a distance of 3 meters: excessive roughness, runs, blisters, inclusions, craters, dull spots, pinholes, pits, scratches or any other unacceptable flaws. The organic coating shall be of even color and gloss with good hiding power. When viewed on site, these criteria shall be fulfilled as follows:

- for parts used outside: viewed at a distance of 5 m
- for parts used inside: viewed at a distance of 3 m

Tape adhesion

The lattice method is described to measure the adhesion of a dry paint film on metal surfaces, using a cutting knife according to ASTM D3359 (1993) method B and a 25 mm transparent adhesive tape with a pre-agreed adhesive strength.

An area free of defects and surface imperfections is selected, making sure it is clean and dry. Extreme values of temperature and humidity can affect the results. The specimen is placed in a firm place and parallel cuts are made according to the following specifications:

- For dry thicknesses up to 50 microns, the cuts are spaced 1 mm apart.
- Between 50 and 125 microns, the cuts are spaced 2 mm, making all the cuts approx. 20mm long and pressing just enough to cut the film until touching the substrate.

The surface is cleaned with a brush or tissue in order to remove any residue. Subsequent cuts are made at 90° centered on the initials, cleaning the surface again. The incisions should have reached the metal, if not, a trellis is made again in another area.

Two full strips of tape are removed. A third is stretched at a steady pace and is cut a length of 75 mm.

The center of the tape is placed over the center of the trellis and is spread over its area gently with the finger. To ensure a good contact, rubbing over with the extreme rubber of a pencil. The color under the tape is a good indication that the contact is well made.

After 90±30 sec. of the application, the adhesive tape is stretched by one end and at a constant speed at an angle as close as possible to 180°. The trellis area is inspected for possible paint peeling. A classification of adhesion is given according to the visual patterns. The test is repeated in two other places on each specimen. In multi-layer systems, is needed to specify where the adhesion has failed: between the first layer and the substrate, between the first and the second, etc.

Flow test (incline method)

The inclined flow test is run in accordance with ASTM D4242 or ISO 8130-11.

Gel time of a thermosetting powder coating

The standard test method for gel time determination of thermosetting powder coatings obtained at a given temperature is run in accordance with ASTM D4217-07 or ISO 8130-6:1992.

Thickness of dry film

The standard method for measuring the thickness of dry film on surfaces is carried out as it is described in ASTM D7091-22 OR ISO 19840.

A layer thickness measuring device according to ISO 2178 is used. The instrument is calibrated according to the procedure in an area free of magnetic and electric fields, as well as vibrations, making sure that the coating is totally dry and clean before using the instrument.

The readings are taken in a place without vibrations or magnetic or electric fields. A sufficient number of readings are made to characterize the surface. For laboratory measurements, a minimum of three readings on a 75x150 mm plate are recommended more in proportion to its size. For field measurements, a minimum of 5 measurements are recommended, made everywhere for a surface of 10 m2. Each of the 5 determinations must be the average of 3 separate readings within an area circular of 12 mm. in diameter.

Penetration test

The method described to carry out the indentation test on a dry film of powder paint, using an embossing device according to INTA 16.02.63.A-1976.

Test tubes of at least 7x7 cm. and 0.3-1.25 mm. of thickness are prepared. The test is carried out at 20°C, in a controlled humidity and the test tubes will remain in these conditions a minimum of 16 h. once dried and before starting the essay.

The test tube is firmly hold between the matrix and the clamp on the device, in such a way that the ball rests on the

unpainted part. The measurement scale is set to zero. The ball must advance at a constant speed of 0.2 mm/sec until it is observed a breaking, cracking or peeling of the film or until the depth of drawing corresponds to that specified in the sample.

The indentation depth is read with an accuracy of 0.1 mm. The results must indicate the nature, thickness and preparation of the test tubes used, the method used for film extension and thickness and how to make the observation (naked eye or magnifications).

Gloss of dry film

The method for measuring the gloss on a dry powder coating film over metal surfaces is run using a glossmeter according to ASTM D523 (1994). This test method covers the measurement of the specular gloss for glossmeter geometries of 60, 20, and 85°.

Each specimen is placed under or on the glossmeter. In case brush marks or similar texture effects are present, ensure that the directions of the marks are parallel to the axes of the incident and reflected lights of the device. A minimum of 3 measurements are needed in an area of 75x150 mm. If the margin is greater than two units, an additional measurement is taken and the average afterwards is calculated to discard divergent values.

Distinctness-of-image (DOI)

The standard method for the instrumental measurement of distinctness-of-image (DOI) gloss of coated surfaces is run according to ASTM D5767-18 using electro-optical measuring techniques. Although test methods D523 and D4039 are useful in characterizing some aspects of glossy appearance, they do not provide satisfactory ratings for DOI (image clarity). The measurement conditions given conform to the conditions specified in test methods E430 and ISO 10216.

Haze

The standard method ASTM D5382-02 (2017) provides guide to evaluation and testing of color, color difference, gloss, metamerism, and miscellaneous optical properties of optical powder coatings by both visual and instrumental means. Visual evaluation of optical properties shall include visual gloss test method, Munsell Color Order System, and ASTM test standards indicated in the specification. Instrumental evaluation of optical properties shall include specular gloss test, filter photometry, reflection haze, fluorescence, and ASTM test standards indicated in the specification.

**Abbreviations**

The following materials and abbreviations are used in the examples.

***NPG*****:** Neopentyl glycol
***EG*****:** Ethylene glycol
***TMP*****:** Trimethylolpropane
***DEG*****:** Diethylene glycol
***PG*****:** Propylene glycol
***TPA*****:** Terephthalic acid
***IPA*****:** Isophthalic acid
***AA*****:** Adipic acid
***CA:*** *Citric acid*
***TMA*****:** Trimellitic Anhydride
***BuSnTO*****:** n-butyltin trioctoate
***TNPP*****:** Tris(nonylphenyl) phosphite
***Araldite GT-7004***: (polyfunctional epoxy resin)
***AV***: Acid value
***OHV***: Hydroxyl value
***P***: Poise
***Wt*** %: Weight percent
***Mn*****:** Number average molecular weight
***Mw*****:** Weight average molecular weight
***D*****:** Polydispersity
***Tg*****:** Glass transition Temperature
***Film Tg*****:** Glass transition Temperature of the cured film
***St***: Standard

## Synthesis and formulation examples

Example 1: Branched polyester with hydroxylated branching polyacid units (invention)

NPG (28 g), EG (313 g), TMP (5 g), DEG (398 g), PG (873 g), TNPP (7 g) and BuSnTO (7 g) were charged to a 6L glass reaction vessel, equipped with stirrer, packed column with top thermocouple, condenser, distillate collection vessel, nitrogen sparge, vacuum line and thermocouple. The vessel was heated via an electric mantle at 130°C until the contents were molten and mobile. TPA (2500 g) was added to the vessel, a nitrogen blanket was applied and the contents stirred vigorously. The vessel was continuously heated to keep a column top temperature of around 99°C indicating continuous distillation of reaction water. During the distillation process, the batch temperature was progressively increased and allowed to rise to 215°C. The batch contents were regularly sampled, cooled, and visually checked for clarity. When batch contents were clear when cooled to room temperature and acid value (AV) and viscosity measured reach the theoretical target AV (< 18 mg KOH/g), this was taken as an indication that Stage 1 of the polyesterification process was complete.

Once the AV reached the suitable value, temperature was cooled down to 210°C, IPA (131 g) was added to the reaction vessel, the mixture was heated up to 235°C and stirred for 1h. After that, temperature was cooled down again to 200°C, AA (2 g) and antifoam (1 g) were added to the vessel, the mixture was heated up to 210°C and stirred for 0.5h. The vessel content was cooled down to 160-165°C, CA (1114 g) was charged along with antifoam (4 g) and the temperature was kept at 160-165°C for 1h. Then, vacuum was applied and batch temperature was maintained at 160-165°C. The batch was sampled regularly to check AV and viscosity. When the target AV (95-105 mg KOH/g) and viscosity (15.0-25.0 Pa s) were reached, the reaction vessel was emptied over an aluminum dish and allowed to cool to room temperature obtaining a clear slightly yellow solid. The final AV of the polyester was 99.7 mg KOH/g and the melt viscosity measured at 165°C was 18.3 Pa s. This material was called resin 1. Resin 1 has a molar content of citric acid units of 13.7% based on the number of moles of the resin.

Example 2: Branched polyester with hydroxylated branching polyacid units (comparative)

Example 1 was repeated except that the amount of CA was lowered such that the resulting resin (Resin 2) had a molar content of citric acid units of 8.5% based on the number of moles of the resin.

Example 3: Branched polyester with non-hydroxylated branching polyacid units (comparative)

Example 1 was repeated except that the amount of CA was replaced by an equivalent amount of moles of TMA.

Example 4: Compounding, extrusion and application

The branched polyesters of Examples 1-3 were formulated into powder coating compositions by mixing with epoxy functional crosslinker (Araldite GT-7004) in a weight ratio polyester/ Araldite GT-7004 of 48/52 along with catalyst (REAFREE C4705-10), pigments ($TiO_2$), surface additive (BYK 360P) and degassing agent (Benzoin) according to the formulations described below and summarized in **Table 2.**

The components were premixed in a high speed Thermoprism Pilot Mixer 3 premixer at 1500 rpm for 20 seconds before being extruded as shown in **Table 2.** The extruder speed was 230 rpm and the four extruder barrel zone temperatures were set at 25, 35, 85 and 100-130°C (extruder conditions shown in **Table 3).** Following extrusion, coatings were ground using a Kemutec laboratory classifying microniser.

The classifier was set at 10 rpm, the rotor was set at 8 rpm and the feed was set at 5.2 rpm. The coatings were milled and sieved to 100μm using Russel Finex 100micron mesh Demi Finex laboratory vibrating sieves.

The coated panels were then cured in a fan assisted oven using **Table 4** conditions to yield films with the properties also shown in **Table 4.** The final mixed products have a gel time of about 1.5-3.0 minutes at 140°C.

For evaluating the powder coating quality, the obtained powders were electrostatically applied onto panels using a Nordson Surecoat corona spray gun. For appearance assessment, coatings were applied onto 100mm x 300mm aluminum panels. For weathering tests, coatings were applied onto 100mm x 150mm aluminum panels. For mechanical tests, coatings were applied onto 100mm x 150mm pretreated steel panels.

The coated panels were then cured at 140°C for 20 minutes in a fan assisted oven to yield films with the properties shown in **Table 4.** The cured film thickness was 60-80 μm. The samples were cooled by ambient conditions and the appearance, weathering and mechanical tests were done between 24 and 36 hours after curing. The final mixed products have a gel time of about 1.0-3.5 minutes at 135°C.

Example 5: Results and powder coatings evaluation

In **Table 1,** Resins 1-3 obtained in Examples 1-3 were analyzed using the above described methods to determine the acid value (AV), the hydroxyl value (OHV), viscosity at 165°C, glass transition temperature (Tg), Mw, Mn, polydispersity (D), gel time at 135°C and 140°C and the molar amount of citric acid units.

**Table 1:** Properties of branched polyesters of Examples 1-3

| Resin | AV (mg KOH/g) | OHV (mg KOH/g) | Viscosity (165°C) (Pa·s) | Tg (°C) | Mw | Mn | D | Gel time (135°C/ 140°C) (sec) | CA (mol%) |
|---|---|---|---|---|---|---|---|---|---|
| **1 (inv)** | 99.7 | 49.8 | 18.3 | 58.3 | 11792 | 4029 | 2.93 | 354/293 | 13.7 |
| **2 (comp)** | 95.1 | 45.2 | 3.41 | 54.1 | 4878 | 2694 | 1.81 | >600/59 5 | 8.5 |
| **3 (comp)** | 101.2 | -1.8 | 40.2 | 74.6 | 9440 | 3514 | 2.69 | 419/358 | 13.7 |

**Table 2:** Formulation of coating compositions

| | Formulation (F1) with epoxy crosslinker (parts by weight) |
|---|---|
| **Branched polyester** | 324 |
| **Araldite GT-7004** | 360 |
| **REAFREE C4705-10** | 40 |
| **Benzoin** | 5 |
| **BYK 360-P** | 10 |
| **TiO2 (Kronos 2160)** | 265 |

**Table 3:** Extrusion conditions for the preparation of the coating compositions

| | |
|---|---|
| **Extruder** | ZSK-26 |
| **Number of passes** | 1 |
| **Temperature (°C)** | 30-100 |
| **Barrel Speed (rpm)** | 230 |

**Table 4:** Properties of coatings

| | A | B | C |
|---|---|---|---|
| **Branched Polyester** | **Resin 1** | **Resin 2** | **Resin 3** |
| **Formulation** | **F1** | **F1** | **F1** |
| **Flow 140°C (mm)** | 3 | 15 | 0 |
| **Gel Time (140°C) (s)** | 85 | 185 | 45 |
| **Curing Conditions (Object T)** | 20' at 140°C | 20' at 140°C | 20' at 140°C |
| **Thickness (μm)** | 78 | 75 | 78 |
| **Visual flow (PCI)** | 2 | 4 | 2 |
| **Impact direct/Reverse (2Kg·cm) until 200 cm** | 200/200 | 40/0 | 200/200 |
| **Penetration (mm)** | >7 | >7 | >7 |
| **Adhesion (GT-val: 0-Excel, 5-bad)** | GT0 | GT0 | GT0 |
| **Conical mandrel (%)** | 100 | 100 | 100 |
| **MEK resistence (double rubs)** | >200 | >200 | >200 |

(continued)

| | A | B | C |
|---|---|---|---|
| **Branched Polyester** | **Resin 1** | **Resin 2** | **Resin 3** |
| **T bend** | 1/2T | 1/2T | 1T |
| **GLOSS 20° (%)** | 74.2 | 87.2 | 60.3 |
| **GLOSS 60° (%)** | 103.0 | 103.0 | 100.0 |
| **GLOSS 85° (%)** | 98.1 | 98.8 | 96.4 |
| **L* (value)** | 94.47 | 95.08 | 95.3 |
| **a* (value)** | -1.54 | -1.73 | -1.6 |
| **b* (value)** | 1.90 | 2.58 | 1.64 |
| **DOI** | 26.2 | 37.3 | 14.7 |
| **HAZE (Log.)** | 350 | 230 | 465 |

Conclusions

The branched polyester according to the invention (resin 1) clearly shows an improved resin reactivity, compared to that of comparative branched polyesters (resins 2 and 3) which respectively use less amount of citric acid (8.5% mol) and TMA instead of citric acid. Accordingly, the branched polyester according to the invention can advantageously be used to obtain low-cure powder coatings, i.e. the curing step can be conducted by heating the coating composition for shorter periods of time and/or at lower temperatures, and the curing can be carried out on heat-sensitive substrates such as wood, in particular medium density fiber board (MDF), plastics, composites and certain low melting metal alloys.

The branched polyester obtained using at least 9 mol% of component b) exhibits suitable Tg and viscosity, as well as acceptable color index compared to those using TMA (aromatic compound) or less amounts of citric acid as component b).The use of TMA as the branching component, negatively affects the Tg (around 74°C) and flow (0 mm) of the resulting polyester.

When citric acid is used as the hydroxylated branching polyacid component b), both mechanical and chemical properties were excellent, as well as gloss and flow. It is worth noting that using higher amounts of citric acid in the resin formulation at least 9 mol%, invention example) leads to enhanced mechanical properties compared to those of comparative example 2 (8,5 mol% citric acid). Citric acid also results in coatings with better T bend properties, levelling and less haze.

As a consequence, the quality of the coating's overall appearance increased, reducing common imperfections normally found in these coatings. Additionally, outdoor resistance and storage stability were unexpectedly improved as the resins did not show any sign of degradation overtime and obtained better results in QUV-B tests.

To conclude, these examples prove that the replacement of TMA by a substantial amount of hydroxylated polyacid in saturated polyesters provides resins and powder coatings with higher reactivity and enhanced properties.

## Claims

**1.** A branched polyester obtained by reacting:

a) a hydroxyl-functionalized polyester component based on a polyol component a1) and a polyacid component a2); and

b) a hydroxylated branching polyacid component having an acid functionality of at least 3 and a hydroxyl functionality of at least 1;

wherein the number of moles of component b) is from 9 to 20% based on the total number of moles of components a) + b).

**2.** The branched polyester according to claim 1, wherein the branched polyester is obtained by reacting components a) and b) so that at least part of the units derived from component b) are non-terminal units.

**3.** The branched polyester according to claim 1 or 2, wherein component a) has a hydroxyl value of from 80 to 200 mg

KOH/g, preferably from 90 to 195 mg KOH/g, more preferably from 100 to 190 mg KOH/g

**4.** The branched polyester according to any one of claims 1 to 3, wherein component a) is based on:

a1) a polyol component comprising a11) a diol component; and optionally a12) a branching polyol component having a hydroxyl functionality of at least 3; and
a2) a polyacid component comprising a21) a diacid component;

wherein component a2) is free of citric acid, isocitric acid, derivatives thereof and mixtures thereof.

**5.** The branched polyester according to any one of claims 1 to 3, wherein component a) is a substantially linear polyester.

**6.** The branched polyester according to any one of claims 1 to 5, wherein component b) comprises at least one hydroxylated branching polyacid selected from the group consisting of citric acid, isocitric acid, derivatives thereof and mixtures thereof, preferably citric acid or isocitric acid, more preferably citric acid.

**7.** The branched polyester according to any one of claims 1 to 6, wherein the branched polyester has an acid value of from 60 to 130 mg KOH/g, preferably from 70 to 120 mg KOH/g, more preferably from 80 to 110 mg KOH/g.

**8.** The branched polyester according to any one of claims 1 to 7, wherein the branched polyester has a hydroxyl value from 30 to 70 mg KOH/g, preferably from 35 to 65 mg KOH/g, more preferably from 40 to 60 mg KOH/g.

**9.** The branched polyester according to any one of claims 1 to 8, wherein the branched polyester has a molar ratio of OH groups to COOH groups that is lower than 1, in particular from 0.9 to 0.99, more particularly from 0.92 to 0.98, even more particularly from 0.94 to 0.97.

**10.** Use of the branched polyester according to any one of claims 1 to 9, in a coating composition, preferably in a powder coating composition, more preferably in a crosslinkable powder coating composition.

**11.** A coating composition comprising

- the branched polyester according to any one of claims 1 to 9;
- a crosslinker component;
- optionally a catalyst;
- optionally one or more additives.

**12.** The coating composition according to claim 11, wherein the crosslinking component comprises at least one epoxy resin, in particular at least one epoxy resin selected from a glycidyl ether resin or triglycidylisocyanurate, more particularly a glycidyl ether resin based on bisphenol A or bisphenol F.

**13.** A coating obtained by curing the coating composition according to claim 11 or 12.

**14.** The coating according to claim 13, wherein the curing is conducted by heating the coating composition at a temperature of from 120 to 200°C, in particular from 125 to 195°C, more particularly from 130 to 190°C, even more particularly from 135 to 185°C, more particularly still from 140 to 180°C.

**15.** A substrate fully or partially coated with the coating according to claim 13 or 14.

**16.** The substrate according to claim 15, wherein the substrate is a heat-sensitive substrate.

**17.** A process for coating a substrate comprising the following steps:

- applying the coating composition according to claim 11 or 12 on at least part of a surface of a substrate; and
- curing the coating composition.

Europäisches Patentamt
European Patent Office
Office européen des brevets

# EUROPEAN SEARCH REPORT

Application Number
EP 24 38 2622

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NOORDOVER B A J ET AL: "Biobased step-growth polymers in powder coating applications", PROCESS IN ORGANIC COATINGS, ELSEVIER BV, NL, vol. 65, no. 2, 1 June 2009 (2009-06-01), pages 187-196, XP026021357, ISSN: 0300-9440, DOI: 10.1016/J.PORGCOAT.2008.11.001 [retrieved on 2008-12-16] | 1-3,5-17 | INV. C08G63/20 C08G63/91 C09D5/03 C09D167/00 |
| A | * page 191, right-hand column, line 35 - page 194, right-hand column, line 8; figures Scheme 4, Fig. 4, Fig. 5; example Entry 8; tables 5, 6 * ----- | 4 | |
| A | EP 1 481 963 A1 (EASTMAN CHEM CO [US]) 1 December 2004 (2004-12-01) * claim 12; examples 1-7; tables 1, 2 * ----- | 1-17 | |
| A | US 6 284 845 B1 (PANANDIKER KAMLESH PAI [US] ET AL) 4 September 2001 (2001-09-04) * claim 9; example 1; table 1 * ----- | 1-17 | TECHNICAL FIELDS SEARCHED (IPC) C08G C09D |

The present search report has been drawn up for all claims

1

| Place of search | Date of completion of the search | Examiner |
|---|---|---|
| The Hague | 29 November 2024 | Enescu, Cristina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........
& : member of the same patent family, corresponding document

EPO FORM 1503 03.82 (P04C01)

# ANNEX TO THE EUROPEAN SEARCH REPORT ON EUROPEAN PATENT APPLICATION NO. EP 24 38 2622

This annex lists the patent family members relating to the patent documents cited in the above-mentioned European search report.
The members are as contained in the European Patent Office EDP file on
The European Patent Office is in no way liable for these particulars which are merely given for the purpose of information.

29-11-2024

| Patent document cited in search report | Publication date | Patent family member(s) | Publication date |
|---|---|---|---|
| EP 1481963 A1 | 01-12-2004 | AT E274488 T1 | 15-09-2004 |
| | | AU 769617 B2 | 29-01-2004 |
| | | BR 9913799 A | 29-05-2001 |
| | | CA 2344540 A1 | 30-03-2000 |
| | | CN 1318045 A | 17-10-2001 |
| | | DE 69919730 T2 | 01-09-2005 |
| | | EP 1114020 A1 | 11-07-2001 |
| | | EP 1481963 A1 | 01-12-2004 |
| | | JP 2002526569 A | 20-08-2002 |
| | | KR 20010075172 A | 09-08-2001 |
| | | US 6255523 B1 | 03-07-2001 |
| | | US 2002091206 A1 | 11-07-2002 |
| | | WO 0017148 A1 | 30-03-2000 |
| | | ZA 200102125 B | 14-06-2002 |
| US 6284845 B1 | 04-09-2001 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4065438 A
- US 4147737 A
- EP 1054917 A